# EUROPÄISCHE PATENTSCHRIFT

(11) **EP 2 234 350 B1**
(45) Veröffentlichungstag und Bekanntmachung des Hinweises auf die Patenterteilung: **14.09.2016**
(21) Anmeldenummer: 10003253.1
(22) Anmeldetag: 26.03.2010
(51) Int. Cl.: H04L 12/58, H04W 4/16, H04W 4/12

(54) **Weiterleitung von Nachrichten in Telekommunikationsnetzen**
Forwarding of messages in telecommunications networks
Acheminement d'informations dans un réseau de télécommunication

(30) Priorität: 26.03.2009 DE 102009014400
(43) Veröffentlichungstag der Anmeldung: 29.09.2010
(73) Patentinhaber: Vodafone Holding GmbH, 40213 Düsseldorf (DE)
(72) Erfinder: Hartl, Mike, 40878 Ratingen (DE); Schnare, Dirk, 40479 Düsseldorf (DE); Bieniek, Rainer, 47178 Duisburg (DE)
(74) Vertreter: Ring & Weisbrodt

(56) Entgegenhaltungen:
- EP-A1- 1 815 697
- DE-A1- 10 117 052
- DE-A1-102005 015 385
- US-A- 5 742 668
- US-A1- 2005 265 347

## Beschreibung

Die vorliegende Erfindung betrifft ein Verfahren zur automatischen Weiterleitung von Nachrichten gemäß einem SMS- und/oder MMS-Format, in Mobilfunknetzen.

Gegenstand der vorliegenden Erfindung ist darüber hinaus ein an einer Übertragung von Nachrichten beteiligter Netzknoten in einem Mobilfunknetz, welcher ausgebildet und/oder eingerichtet ist, die durch einen Netzknoten ausführbaren Verfahrensschritte eines erfindungsgemäßen Verfahrens auszuführen.

Im Stand der Technik sind Verfahren und Systeme zur Übertragung von Nachrichten in einem Telekommunikationsnetz, insbesondere einem Mobilfunknetz gemäß einem GSM-, GPRS- und/oder UMTS-Funknetzstandard, in zahlreichen Ausgestaltungen bekannt, beispielsweise aus der US 2002/0173320 A1, der US 2004/0133623 A1, oder der WO 2005/125094 A1.

In Mobilfunknetzen, insbesondere Mobilfunknetzen gemäß einem GSM-, GPRS- und/oder UMTS-Funknetzstandard, nutzen Mobilfunkteilnehmer ein in einem Mobilfunknetz betreibbares Endgerät in der Regel in Zusammenhang mit einem Mobilfunkteilnehmeridentifikationsmodul (SIM: Subscriber Identity Module), welches einen authentifizierenden Zugang zum Mobilfunknetz ermöglicht. Das Mobilfunkteilnehmeridentifikationsmodul (SIM) ist dabei üblicherweise als austauschbare Steckkarte, die sogenannte SIM-Karte, ausgebildet. Mit einem Mobilfunkteilnehmeridentifikationsmodul stellen Mobilfunknetzbetreiber und/oder Mobilfunknetzanbieter Teilnehmern (Kunden) mobile Telefonanschlüsse und/oder Datenanschlüsse zur Nutzung von Kommunikationsdiensten zur Verfügung

Immer mehr Mobilfunkteilnehmer besitzen und nutzen zwei oder mehr kartenförmige Mobilfunkteilnehmeridentifikationsmodule, sogenannte SIM-Karten (SIM: Subscriber Identity Module), um mit einem in einem Mobilfunknetz betreibbaren Endgerät einen Zugang zu dem jeweiligen Mobilfunknetz zur Nutzung von Kommunikationsdiensten zu bekommen. Um nicht immer zwei oder mehr in dem Mobilfunknetz betreibbare Endgeräte mit sich führen zu müssen, leiten viele Nutzer eingehende Gespräche auf eine andere SIM-Karte und damit auf einen anderen Anschluss um. Eine solche Umleitung funktioniert nicht für den Empfang von Nachrichten gemäß SMS und/oder MMS. Im Mobilfunknetz nicht zugestellte Nachrichten, insbesondere SMS und/oder MMS, werden nach einigen Tagen automatisch gelöscht. Dem vorgesehenen Nachrichtenempfänger gehen diese Nachrichten damit unter Umständen verloren.

Aus der US 2005/0265347 A1 ist ein Verfahren zum Weiterleiten von Nachrichten in einem Mobilfunknetz bekannt. Es ist vorgesehen, dass ein Server des Mobilfunknetzes dazu eingerichtet ist, Nachrichten zu empfangen und an ein adressiertes Endgerät zu übertragen. Dies geschieht in Abhängigkeit eines Zustandes des Endgerätes, beispielsweise kann seitens des Endgerätes eine Weiterleitung von Nachrichten aktiviert sein, so dass die an das Endgerät adressierte Nachricht an ein weiteres Endgerät weitergeleitet werden.

Die US 5,742,668 behandelt ein sogenanntes Personal Communications Internetwork (PCI), welche eine Schnittstelle zwischen einem leitungsgebundenen und einem leitungslosen Übertragungsnetzwerk ausbildet. Mittels dieses PCI kann der Versand und der Empfang von elektronischen Nachrichten (e-mails) eines Teilnehmers entsprechend der Konfiguration des Teilnehmers über einen Fernzugriff gesteuert werden, so dass die elektronischen Nachrichten jeweils zwischen mit den leitungslosen bzw. leitungsgebundenen Netzen übertragen werden können.

Die EP 1 815 697 A1 befasst sich mit dem Weiterleiten von SMS-Nachrichten in einem Mobilfunknetz von einem Mobilfunktelefon auf ein anderes Mobilfunktelefon, wobei sichergestellt werden soll, dass SMS-Nachrichten den Empfänger auch erreichen. Darüber hinaus ist es möglich, an ein Mobilfunktelefon gerichtete Nachrichten auch an andere Medien, beispielsweise an e-Mail-Adressen weitergeleitet werden können.

Aus der DE 101 17 052 A1 ist ein Verfahren zum automatischen Umleiten von für ein Mobilfunktelefon eines Empfängers in einem Mobilfunknetz bestimmten Nachrichten auf ein anderes Mobilfunktelefon oder zu einer e-Mail-Adresse. Hierzu wird im Home Location Register (HLR) eine Umleitungsadresse des Empfängers gespeichert, welche von einer Empfängerrelaisstation (MMS-Relay), an welche die Nachricht gesendet wurde, abgefragt wird. Die Nachricht wird daraufhin an die abgefragte Umleitungsadresse gesendet, wobei der Nutzer die Umleitung von Nachrichten einrichten, aktivieren und deaktivieren kann. DE 10 2005 015 385 zeigt eine automatische Übernahme der Weiterleitung von Sprachanrufen für MMS Nachrichten und umgekehrt. Nachteilig bei dem vorgenannten Stand der Technik ist, dass jeweils nur dediziert die Umleitung von Nachrichten adressiert ist.

Der Erfindung liegt in Anbetracht dieses Standes der Technik die Aufgabe zugrunde, technische Mittel bereitzustellen, welche die Weiterleitung bzw. Umleitung von Nachrichten gemäß einem SMS- und/oder MMS-Format in einem Mobilfunknetz vereinfachen.

Zur technischen Lösung wird mit der vorliegenden Erfindung ein Verfahren zur automatischen Weiterleitung von an einen mit einer Kontaktierungsinformation in einem Mobilfunknetz als Teilnehmer registrierten Nachrichtenempfänger gerichteten und an die Kontaktierungsinformation adressierten Nachrichten gemäß einem SMS- und/oder MMS-Format in Mobilfunknetzen, wobei
a) der Nachrichtenempfänger seitens einer zur Verwaltung der Weiterleitung eingerichteten Recheneinrichtung des Mobilfunknetzes eine Adressierungsinformation für den Empfang der Nachrichten hinterlegt;
b) seitens der Recheneinrichtung des Mobilfunknetzes die Kontaktierungsinformation mit der hinterlegten Adressierungsinformation verknüpft wird;
c) seitens der Recheneinrichtung des Mobilfunknetzes unter der Kontaktierungsinformation eine Nachricht für den Nachrichtenempfänger empfangen wird;
d) die Kontaktierungsinformation der empfangenen Nachricht seitens der Recheneinrichtung des Mobilfunknetzes durch die Adressierungsinformation ersetzt oder um die Adressierungsinformation ergänzt wird;
   dadurch gekennzeichnet, dass
e) die Hinterlegung einer Adressierungsinformation seitens der zur Verwaltung der Weiterleitung eingerichteten Recheneinrichtung des Mobilfunknetzes bei einer Hinterlegung einer Weiterleitung bzw. Umleitung von Sprachanrufen automatisch durch eine Information hinsichtlich der Adressierungsinformation für die Weiterleitung bzw. Umleitung von Nachrichten von dem Home Location Register (HLR) erfolgt;
   oder
   die Hinterlegung einer Adressierungsinformation für die Weiterleitung von Nachrichten durch den Nachrichtenempfänger mittels einer durch eine Web-Anwendung bereitgestellte Benutzerschnittstelle erfolgt und bei Hinterlegung der Adressierungsinformation automatisch eine Information hinsichtlich der Adressierungsinformation für die Weiterleitung bzw. Umleitung von Sprachanrufen vor der für die Weiterleitung von Nachrichten eingerichteten Recheneinrichtung des Mobilfunknetzes an das Home Location Register (HLR) erfolgt;
f) der Nachrichtenempfänger über die durch die Web-Anwendung bereitgestellte Benutzerschnittstelle konfiguriert, ob eine Kopie der Nachrichten an ein die Kontaktierungsinformation nutzendes Endgerät des Nachrichtenempfängers gesendet werden soll;
g) falls der Nachrichtenempfänger ein Senden einer Kopie der Nachrichten an die Kontaktierungsinformation konfiguriert hat, eine Kopie der Nachricht an das die Kontaktierungsinformation nutzende Endgerät des Nachrichtenempfängers gesendet wird;
h) die seitens der Recheneinrichtung des Mobilfunknetzes empfangene Nachricht an wenigstens eine weitere Recheneinrichtung übertragen wird, welche die Nachricht in ein Format korrespondierend der Art der Adressierungsinformation verbringt,
   wobei eine direkte Weiterleitung einrichtbar ist; und
i) die so bearbeitete Nachricht von der weiteren Recheneinrichtung an die Adressierungsinformation gesendet wird.

Durch die erfindungsgemäße Ausgestaltung wird eine Weiterleitung von Nachrichten, vorzugsweise Nachrichten gemäß einem SMS- und/oder MMS-Format, ermöglicht. Die Weiterleitung von Nachrichten, vorzugsweise Nachrichten gemäß SMS- und/oder MMS-Format erfolgt in einem Mobilfunknetz als Telekommunikationsnetz vorteilhafterweise, wenn im HLR (HLR: Home Location Register) das sogenannte CFU-Flag (CFU: Call Forwarding Unconditional) gesetzt ist. Vorteilhafterweise ist somit bei gesetztem CFU-Flag sowohl eine Weiterleitung von Nachrichten gemäß SMS- und/oder MMS-Format als auch eine Weiterleitung von Sprachanrufen an die für den Empfang von Nachrichten im Telekommunikationsnetz hinterlegte Adressierungsinformation aktiviert.

Darüber hinaus ist durch die erfindungsgemäße Ausgestaltung vorteilhafterweise die Möglichkeit eröffnet, das Format der weiterzuleitenden Nachrichten an den jeweiligen Nachrichtenempfänger und die von diesem geforderten bzw. erforderlichen Formate automatisiert anzupassen. Letzteres ist insbesondere bei netzübergreifenden Nachrichtenübertragungen von einem Telekommunikationsnetz in ein anderes von Vorteil, welche ansonsten oftmals aufgrund nicht gegebener Kompatibilitäten hinsichtlich des Formats der Nachrichten fehlerhaft und damit unbrauchbar erfolgt.

Die vorliegende Erfindung realisiert die Möglichkeit Nachrichten gemäß SMS und/oder MMS-Standard automatisch, das heißt insbesondere ohne zusätzliche Konfiguration neben der standardgemäß realisierten und existierenden Umleitung von Gesprächen, auf eine oder mehrere andere Rufnummern in dem Telekommunikationsnetz, insbesondere Mobilfunknetz, umzuleiten, wobei vorteilhafterweise sowohl Rufnummern im Mobilfunknetz, sogenannte Mobilfunkrufnummern (MSISDN: Mobile Subscriber ISDN; ISDN: Integrated Services Digital Network) und Festnetzrufnummern die Nachricht (SMS und/oder MMS) terminieren können. Vorteilhafterweise wird es ferner ermöglicht, die Nachricht (SMS und/oder MMS) an eine E-Mailadresse in einem Telekommunikationsnetz zuzustellen.

Gemäß der vorliegenden Erfindung ist zudem vorgesehen, dass zur Vereinfachung der Konfiguration von Weiterleitungen von Nachrichten beziehungsweise Sprachanrufen entweder bei einer Hinterlegung einer Weiterleitung (Umleitung) von Sprachanrufen automatisch eine Information hinsichtlich der Adressierungsinformation für die Weiterleitung (Umleitung) von Nachrichten von dem HLR an eine für die Weiterleitung von Nachrichten eingerichtete Recheneinrichtung des Mobilfunknetzes erfolgt oder bei einer Hinterlegung einer Weiterleitung (Umleitung) von Nachrichten automatisch eine Information hinsichtlich der Adressierungsinformation für die Weiterleitung (Umleitung) von Sprachanrufen von der für die Weiterleitung von Nachrichten eingerichteten Recheneinrichtung des Mobilfunknetzes an das HLR erfolgt.

Erfindungsgemäß erfolgt in Abhängigkeit von dem Format und/oder der Art der Adressierungsinformation seitens des Telekommunikationsnetzes eine Überarbeitung des Formats der Nachricht derart, dass die Nachricht in ein Format korrespondierend dem Format und/oder der Art der Adressierungsinformation verbracht wird. Vorteilhafterweise wird dabei seitens des Telekommunikationsnetzes aus dem Format und/oder der Art bzw. dem Aufbau der Adressierungsinformation das Format der Zielnachricht ermittelt und die Nachricht in das entsprechend ermittelte Format verbracht. So kann beispielsweise bei einer MSISDN oder einer E-Mail als Adressierungsinformation anhand der MSISDN ermittelt werden, welches Format die weiterzuleitende Nachricht erhalten bzw. haben muss. Die weiterzuleitende Nachricht wird dann aus der in Verfahrensschritt c) empfangenen Nachricht erzeugt bzw. generiert.

Vorteilhafterweise wird der Text der Nachricht, das heißt der Nachrichteninhalt, im Rahmen der Formatverbringung seitens des Telekommunikationsnetzes in eine Sprachdatei umgewandelt, welche seitens des Nachrichtenempfängers signalisiert wird. Die Umwandlung der Nachricht in eine Sprachnachricht erfolgt vorteilhafterweise mittels einer Sprachsyntheseeinrichtung, vorzugsweise einem sogenannten "Text to Voice"-Server. Eine weitere vorteilhafte Ausgestaltung der Erfindung sieht vor, dass der Nachrichtenempfänger eine wenigstens eine Rufnummer umfassende Nachricht über das Telekommunikationsnetz empfängt, wobei im Rahmen einer Kommunikationsverbindung unter Nutzung der Rufnummer die Sprachdatei seitens des Nachrichtenempfängers signalisiert wird, vorzugsweise unter Nutzung eines sogenannten Asterisk-Servers.

Eine weitere vorteilhafte Ausgestaltung der Erfindung sieht die Nutzung von Nachrichten dialogorientierter Nachrichtendienste vor. Als dialogorientierte Nachrichtendienste wird besonders bevorzugt sogenanntes conversational messaging vorgesehen, vorzugsweise in Form von sogenannten Messaging Sessions oder Chat. Dabei können Anwender Nachrichten nahezu in Echtzeit austauschen. Eine besonders bevorzugte Ausgestaltung der Erfindung sieht die Nutzung von sogenanntem Instant Messaging als dialogorientierten Nachrichtendienst (conversational messaging) als Dienst vor.

Eine weitere vorteilhafte Ausgestaltung der Erfindung ist gekennzeichnet durch die Nutzung von Nachrichten verzögerter Nachrichtendienste. Eine bevorzugte Ausgestaltung sieht als verzögerte Nachrichtendienste sogenanntes deferred messaging vor, wobei sogenannte store and forward Dienste, besonders bevorzugt SMS (SMS: Short Messaging Service) und/oder MMS (MMS: Multimedia Messaging Service), zum Einsatz kommen.

In einer erfindungsgemäßen Ausgestaltung der Erfindung ist das Telekommunikationsnetz ein Mobilfunknetz und erfolgt die erfindungsgemäße Weiterleitung an ein in einem Mobilfunknetz betreibbares mobiles Endgerät.

Vorteilhafterweise ist die Adressierungsinformation des Nachrichtenempfängers eine Mobilfunkrufnummer, vorzugsweise eine MSISDN (MSISDN: Mobile Subscriber ISDN Number; ISDN: Integrated Services Digital Network), und/oder eine E-Mailadresse.

Eine weitere bevorzugte Ausgestaltung der Erfindung sieht vor, dass das erfindungsgemäße Verfahren in einem Mobilfunknetz gemäß dem GSM- und/oder dem UMTS-Funknetzstandard (GSM: Global System for Mobile Communications; UMTS: Universal Mobile Telecommunications System) ausgeführt wird.

Gegenstand der vorliegenden Erfindung ist darüber hinaus ein an einer Übertragung von Nachrichten beteiligter Netzknoten in einem einem Mobilfunknetz, welcher ausgebildet und/oder eingerichtet ist, die durch einen Netzknoten ausführbaren Verfahrensschritte eines erfindungsgemäßen Verfahrens auszuführen.

Mit der vorliegenden Erfindung werden vorteilhafterweise folgende drei Funktionsbereiche realisiert bzw. erfasst:
1. Abfangen von on-net SMS (bei on-net SMS handelt es sich um Nachrichten aus dem eigenen bzw. gleichen Mobilfunknetz);
2. Abfangen von off-net SMS (bei off-net SMS handelt es sich um Nachrichten aus Fremdnetzen im In- und/oder Ausland);
3. verschiedene Zustellungsarten abgefangener SMS.
   1. Beim Abfangen einer on-net SMS werden vorteilhafterweise folgende erfindungsgemäße Verfahrensschritte realisiert:
      Zunächst wird eine Umleitung von Gesprächen nach einem standardisierten Verfahren durch den Nutzer und/oder durch das Mobilfunknetz ermöglicht. Die Umleitung der Gespräche erfolgt dabei nach einem standardisierten CFU (CFU: Call Forwarding Unconditional gemäß GSM 23.082; GSM 22.082). Dabei wird im VLR/HLR (VLR: Visitor Location Register; HLR: Home Location Register) des Mobilfunknetzes eine neue Rufnummer hinterlegt, auf die Sprachanrufe umgeleitet werden.
      Bei dem erfindungsgemäßen Verfahren wird die in diesem Verfahrensschritt erzeugte beziehungsweise genutzte Information zusammen mit der umleitenden Rufnummer des Nutzers, vorliegend der umleitenden MSISDN, an eine für die Weiterleitung von Nachrichten gemäß SMS eingerichtete Recheneinrichtung, vorliegend vorzugsweise einem sogenannten "Intelligent SMS Application Server" (ISAS), weitergeleitet.
      Diese Recheneinrichtung ("Intelligent SMS Application Server" (ISAS)) interagiert mit einem für die Weiterleitung von Nachrichten im Mobilfunknetz eingerichteten und vorgesehenen Router (SMS-Router) und provisioniert vorteilhafterweise die umleitende Rufnummer (MSISDN), wobei an diese MSISDN gehende Nachrichten (SMS) umgeleitet werden. Erfindungsgemäß werden damit Nachrichten on-net abgefangen und an die Recheneinrichtung (Intelligent SMS Application Server (ISAS)) weitergeleitet.
   2. Beim Abfangen einer off-net SMS werden vorteilhafterweise folgende erfindungsgemäße Verfahrensschritte realisiert:
      Um off-net Nachrichten (SMS) abfangen zu können, müssen die Nachrichten (SMS) im Zielnetzwerk terminiert werden. Dies ist heute aufgrund der gegebenen Architektur nicht vorgesehen und damit auch nicht ermöglicht. Erfindungsgemäß erfolgt hierzu eine Anpassung der Architektur des Mobilfunknetzes, wozu im Mobilfunknetz eine Netzübergangseinrichtung eingeführt wird, vorliegend ein Element des Short Message Service Centers (SMSC), welches als Übergangseinheit beziehungsweise Gateway genutzt wird, vorliegend als sogenanntes Foreign Subscriber Gateway (FSG). Erfindungsgemäß provisioniert der Intelligent SMS Application Server (ISAS) automatisch die umleitende Rufnummer (MSISDN) in den FSG und SMSC. Der beim Abfangen von on-net Nachrichten involvierte SMS-Router ist in diesem Fall vorteilhafterweise nicht involviert, sondern leitet die SMS-Signalisierung transparent durch.
   3. Die Erfindung realisiert vorteilhafterweise die nachfolgenden Zustellungsarten:
      Eingehende Nachrichten (SMS) stehen dem Intelligent SMS Application Server (ISAS) erfindungsgemäß zur weiteren Verarbeitung zur Verfügung. Zur Ausgabe bzw. Signalisierung stehen dabei vorteilhafterweise die nachfolgenden Optionen zur Verfügung:
         1. Ist die Rufnummer, auf die weitergeleitet wird, eine MSISDN, so wird eine SMS unter der MSISDN eines Teilnehmers (A-Party MSISDN) generiert, an den anderen Teilnehmer (B-Party MSISDN) versendet und optional ein CDR (CDR: Call Detail Record) für die Gebührenabrechnung (Billing) für den und/oder die Teilnehmer (A-Party und/oder B-Party) generiert.
         2. Ist die Rufnummer, auf die weitergeleitet wird, eine Festnetzrufnummer, und unterstützt der Festnetzanbieter SMS und/oder MMS im Festnetz, wird die SMS und/oder MMS an das entsprechende SMSC weitergeleitet. Unterstützt der Festnetzanbieter keine SMS, wird die SMS an einen "Text to Voice"-Server weitergeleitet. Zusammen mit einem Asterisk-Server, der durch den Intelligent SMS Application Server (ISAS) gesteuert wird, wird die Festnetzrufnummer angerufen und die von dem "Text to Voice"-Server erzeugte Sprachdatei der SMS abgespielt.

Erfindungsgemäß ist eine sogenannte Web-Application (Web-Anwendung) bereitgestellte bzw. ausgebildete Benutzerschnittstelle vorgesehen, mit der Nutzer bzw. Teilnehmer für die Nutzung einer erfindungsgemäßen Weiterleitung insbesondere über das Internet ihre E-Mailadresse für die erfindungsgemäße Weiterleitung hinterlegen. Im Fall der Weiterleitung wird eine E-Mail mit dem Text der Nachricht (SMS und/oder MMS) an die hinterlegte E-Mailadresse versendet. Die Webanwendung weist vorteilhafterweise ferner eine Benutzerschnittstelle (Interface) auf, welche vorteilhafterweise ergänzend dafür genutzt werden kann, um eine Rufumleitung und dadurch automatisch eine erfindungsgemäße Nachrichten-Weiterleitung, einzurichten. Nutzer bzw. Teilnehmer können somit vorteilhafterweise über die Benutzerschnittstelle bewirken, dass ein CFU-Flag im HLR gesetzt wird, sodass gleichsam eine erfindungsgemäße Weiterleitung für Sprachanrufe und Nachrichten eingerichtet ist. Ferner ist die erfindungsgemäße Weiterleitung für Sprachanrufe und Nachrichten an die Adressierungsinformation direkt über ein mobiles Endgeräte einrichtbar, welches in dem Telekommunikationsnetz unter der Kontaktierungsinformation, vorzugsweise der MSISDN, registriert ist. Das entsprechende CFU-Flag wird dann automatisch im HLR gesetzt.

Vorteilhafterweise ist die Weiterleitung von Nachrichten derart einrichtbar, dass eine direkte Weiterleitung von Nachrichten an ein durch die Adressierungsinformation bezeichnetes Endgerät erfolgt, das heißt, dass die erfindungsgemäße Weiterleitung von Nachrichten kein zusätzliches Zwischenspeichern der weiterzuleitenden Nachrichten erfordert. Darüber hinaus ist vorteilhafterweise zudem die Möglichkeit vorgesehen, weitere Rufnummern einzurichten, um an diese Kopien der Nachrichten (SMS und/oder MMS) zu versenden.

Bei dem erfindungsgemäßen Verfahren erfolgt vorteilhafterweise eine automatische Information über die Zieladresse (MSISDN oder Festnetz) bei einer Umleitung von Sprache auch für SMS (HLR an ISAS).

Ferner erfolgt vorteilhafterweise eine automatische Provisionierung der umzuleitenden MSISDN an den Nachrichten-Router, vorzugsweise den SMS-Router (für on-net SMS) und den FSG (für off-net SMS). Bei der Provisionierung wird die umzuleitende MSISDN insbesondere im Nachrichten-Router für die Weiterleitung eingerichtet und aktiviert.

Vorteilhafterweise wird eine Weiterverarbeitung der Nachrichten, vorzugsweise SMS, durch den ISAS realisiert (Zustellung an MSISDN, Festnetz oder E-Mail und Kopie an weitere SMS). Ferner ist vorteilhafterweise eine Web-Anwendung bereitgestellt, um ISAS-Funktionen administrieren zu können.

Weitere Einzelheiten, Merkmale und Vorteile der Erfindung werden nachfolgend anhand der in der Figur der Zeichnung dargestellten Ausführungsbeispiele näher erläutert. Dabei zeigen:
- Fig. 1: in einer schematischen Prinzipdarstellung ein Ausführungsbeispiel für eine erfindungsgemäße Weiterleitung von on-net SMS und
- Fig. 2: in einer schematischen Prinzipdarstellung ein Ausführungsbeispiel für eine erfindungsgemäße Weiterleitung von off-net SMS.

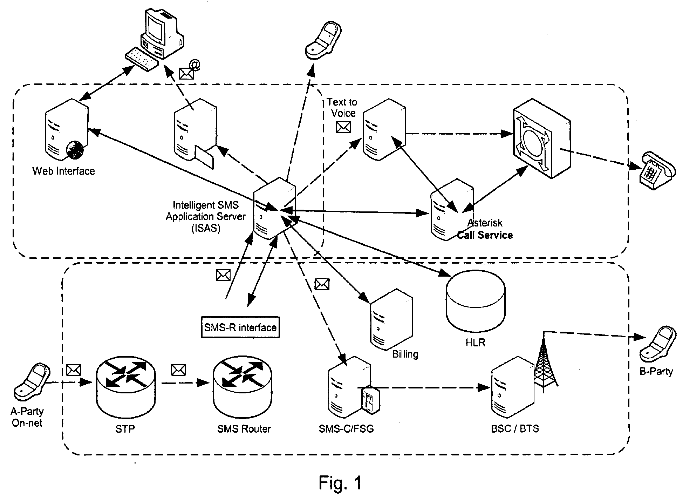

Bei dem in Fig. 1 dargestellten Ausführungsbeispiel einer erfindungsgemäßen Weiterleitung von Nachrichten wird vorliegend von einem Nachrichtensender A-Party eine SMS an einen Nachrichtenernpfänger B-Party geschickt. Sowohl der Nachrichtensender A-Party als auch der Nachrichtenempfänger B-Party sind dabei mit entsprechenden Endgeräten, vorliegend insbesondere Mobilfunktelefonen, in einem Mobilfunknetz, vorliegend einem Mobilfunknetz gemäß einem GSM-, GPRS- und/oder UMTS-Funknetzstandard erfasst und betreibbar. Der Zugang zu dem Mobilfunknetz erfolgt dabei im Zusammenhang mit einer dem jeweiligen Teilnehmer (A-Party, B-Party) von dem Mobilfunknetzbetreiber zur Verfügung gestellten Mobilfunkteilnehmeridentifikationsmodul (SIM). Vorliegend sind die Teilnehmer A-Party und B-Party im gleichen Mobilfunknetz erfasst, so dass es sich bei der erfindungsgemäß weiterzuleitenden SMS um eine on-net SMS handelt.

Der Nachrichtensender A-Party versendet von seinem Endgerät aus eine SMS an den Nachrichtenempfänger B-Party unter Nutzung der dem Nachrichtensender A-Party bekannten Rufnummer MSISDN (Kontaktierungsinformation) des Nachrichtenempfängers B-Party. Die SMS wird dabei von dem Endgerät des Nachrichtensenders A-Party über die Luftschnittstelle des Mobilfunknetzes an einen Vermittlungsknoten STP des Mobilfunknetzes, welcher für den Signalsierungsverkehr (STP: Signaling Transfer Point) eingerichtet ist. Der Vermittlungsknoten STP leitet die SMS des Nachrichtensenders A-Party an einen für die Weiterleitung von SMS eingerichteten SMS-Router weiter. Der SMS Router filtert dabei bei ihm eingehende SMS. Der SMS-Router ist vorliegend über eine Schnittstelle, vorliegend SMS-R interface genannt, mit einem an eine für die erfindungsgemäße Weiterleitung von Nachrichten gemäß SMS eingerichtete Recheneinrichtung, vorliegend Intelligent SMS Application Server (ISAS), verbunden bzw. zumindest für die Weiterleitung der SMS verbindbar.

Der Nachrichtenempfänger B-Party hat seitens der für die erfindungsgemäße Weiterleitung von Nachrichten gemäß SMS eingerichteten Recheneinrichtung ISAS, zu seiner dem Nachrichtensender A-Party bekannten MSISDN (Kontaktierungsinformation) eine Adressierungsinformation, vorliegend ebenfalls eine MSISDN, hinterlegt, an welche an ihn gerichtete SMS weitergeleitet werden sollen. Die Recheneinrichtung ISAS weist vorliegend eine Schnittstelle (Web Interface) auf, über welche die erfindungsgemäße Weiterleitung von dem Nachrichtenempfänger B-Party verwaltbar bzw. administrierbar ist, vorliegend über das Internet, wie anhand der in Fig. 1 symbolisch dargestellten Rechenanlage dargestellt. Seitens der Recheneinrichtung ISAS wird die MSISDN (Kontaktierungsinformation) dann mit der MSISDN (Adressierungsinformation) an die die Weiterleitung erfolgen soll, verknüpft. Die Recheneinrichtung ISAS hinterlegt eine entsprechende Weiterleitungsinformation für Sprachanrufe seitens des Heimatregisters (HLR: Home Location Register) des Mobilfunknetzes, vorliegend gemäß einer sogenannten CFU-Routine (CFU: Call Forward Unconditional). Ferner wird von der Recheneinrichtung ISAS eine entsprechende für die Vergebührung bzw. Abrechnung (Billing) nutzbare Information erzeugt und für die Vergebührung genutzt, insbesondere für die erfindungsgemäße Weiterleitung von SMS als auch für die Weiterleitung von Sprachnachrichten gemäß CFU.

Bei einer seitens der Recheneinrichtung ISAS über das SMS-R interface von dem SMS Router empfangenen SMS, welche - wie oben bereits erläutert - von dem Nachrichtensender A-Party an den Nachrichtenempfänger B-Party gesendet wurde, wird dann die MSISDN (Kontaktierungsinformation) in der empfangenen SMS seitens der Recheneinrichtung ISAS durch die MSISDN (Adressierungsinformation) ersetzt oder ergänzt. Die so bearbeitete Nachricht wird dann von der Recheneinrichtung ISAS an die MSISDN (Adressierungsinformation) des Nachrichtenempfängers B-Party weitergeleitet. Dabei leitet die Recheneinrichtung ISAS die entsprechende SMS über das seitens des Mobilfunknetzes eingerichtete SMS-C/FSG (SMS-C: Short Message Service Center) und entsprechende Basisstationen (BSC/BTS) des Mobilfunknetzes an das entsprechende, die MSISDN (Adressierungsinformation) des Nachrichtenempfängers B-Party nutzende Endgerät (in Fig. 1 rechts unten dargestellt). Eine Kopie dieser Nachricht wird vorliegend vorteilhafterweise von der Recheneinrichtung ISAS an das die MSISDN (Kontaktierungsinformation) des Nachrichtenempfängers B-Party nutzende Endgerät (in Fig. 1 mittig oben dargestellt) und/oder über das Internet als E-Mail an die E-Mailadresse und damit an die Rechenanlage des Nachrichtenempfängers B-Party übersandt. Das Versenden einer entsprechenden Kopie ist vorteilhafterweise von dem Nachrichtenempfänger B-Party über das Web Interface einrichtbar und/oder verwaltbar.

Wie in Fig. 1 weiter dargestellt, ist die Recheneinrichtung ISAS vorliegend mit "Text to Voice"-Einrichtungen bzw. einem entsprechenden Service verbindbar, welcher vorliegend insbesondere einen Asterisk Call Service realisiert. Der Nachrichtenempfänger B-Party kann so vorteilhafterweise an ihn gerichtete SMS auch an Festnetzrufnummem weiterleiten lassen, welche keinen Nachrichtendienst gemäß SMS unterstützen. Die weiterzuleitende SMS wird dabei von der Recheneinrichtung ISAS an einen "Text to Voice"-Server weitergeleitet. Der "Text to Voice"-Server wandelt den Inhalt der SMS, also den Inhalt bzw. Text der als SMS versendeten Nachricht des Nachrichtensenders A-Party in eine Sprachdatei um. Mit dem von der Recheneinrichtung ISAS gesteuerten Asterisk-Server wird dann die von dem Nachrichtenempfänger B-Party für die erfindungsgemäße Weiterleitung hinterlegte Festnetzrufnummer angerufen und die von dem "Text to Voice"-Server erzeugte Sprachdatei der SMS über ein unter der Festnetzrufnummer erreichbares Endgerät abgespielt. Der Übergang von dem Mobilfunknetz in das Festnetz erfolgt dabei über ein entsprechend eingerichtetes Gateway.

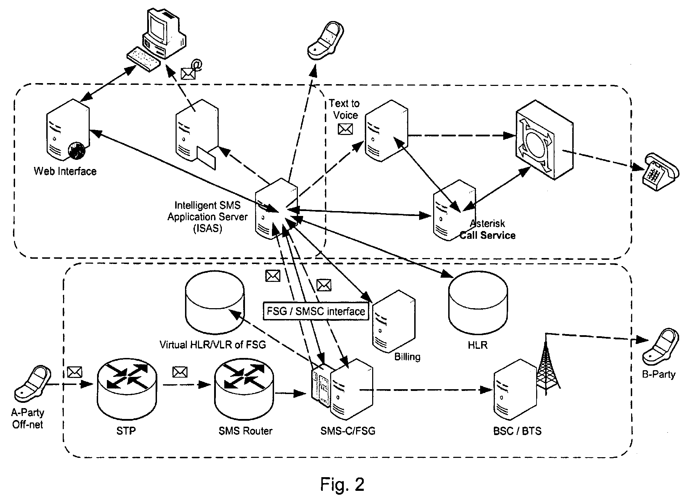

Bei dem in Fig. 2 dargestellten Ausführungsbeispiel einer erfindungsgemäßen Weiterleitung von Nachrichten wird vorliegend ebenfalls von einem Nachrichtensender A-Party eine SMS an einen Nachrichtenempfänger B-Party geschickt. Sowohl der Nachrichtensender A-Party als auch der Nachrichtenempfänger B-Party sind dabei mit entsprechenden Endgeräten, vorliegend insbesondere Mobilfunktelefonen, in einem Mobilfunknetz, vorliegend einem Mobilfunknetz gemäß einem GSM-, GPRS- und/oder UMTS-Funknetzstandard, erfasst und betreibbar. Der Zugang zu dem Mobilfunknetz erfolgt dabei im Zusammenhang mit einer dem jeweiligen Teilnehmer (A-Party, B-Party) von dem jeweiligen Mobilfunknetzbetreiber zur Verfügung gestellten Mobilfunkteilnehmeridentifikationsmodul (SIM). Vorliegend sind die Teilnehmer A-Party und B-Party nicht im gleichen Mobilfunknetz erfasst, so dass es sich bei der erfindungsgemäß weiterzuleitenden SMS um eine off-net SMS handelt.

Der Nachrichtensender A-Party versendet von seinem Endgerät aus eine SMS an den Nachrichtenempfänger B-Party unter Nutzung der dem Nachrichtensender A-Party bekannten Rufnummer MSISDN (Kontaktierungsinformation) des Nachrichtenempfängers B-Party. Die SMS wird dabei von dem Endgerät des Nachrichtensenders A-Party über die Luftschnittstelle des Mobilfunknetzes an einen Vermittlungsknoten STP des Mobilfunknetzes, welcher für den Signalsierungsverkehr (STP: Signaling Transfer Point) eingerichtet ist. Der Vermittlungsknoten STP leitet die SMS des Nachrichtensenders A-Party an einen für die Weiterleitung von SMS eingerichteten SMS-Router weiter. Da die Teilnehmer A-Party und B-Party - im Gegensatz zu dem in Fig. 1 dargestellten Ausführungsbeispiel der Erfindung - vorliegend nicht im gleichen Mobilfunknetz erfasst sind, leitet der SMS Router im Mobilfunknetz des Nachrichtensenders A-Party die SMS an das seitens des Mobilfunknetzes eingerichtete SMS-C/FSG (SMS-C: Short Message Service Center) weiter. Das SMS-C/FSG filtert dabei bei ihm eingehende SMS. Das SMS-C/FSG ist vorliegend über eine Schnittstelle, vorliegend FSG/SMSC interface genannt, mit einem an eine für die erfindungsgemäße Weiterleitung von Nachrichten gemäß SMS eingerichtete Recheneinrichtung, vorliegend Intelligent SMS Application Server (ISAS), verbunden bzw. zumindest für die Weiterleitung der SMS verbindbar.

Der Nachrichtenempfänger B-Party hat seitens der für die erfindungsgemäße Weiterleitung von Nachrichten gemäß SMS eingerichteten Recheneinrichtung ISAS, zu seiner dem Nachrichtensender A-Party bekannten MSISDN (Kontaktierungsinformation) eine Adressierungsinformation, vorliegend ebenfalls eine MSISDN, hinterlegt, an welche an ihn gerichtete SMS weitergeleitet werden sollen. Die Recheneinrichtung ISAS weist vorliegend eine Schnittstelle (Web Interface) auf, über welche die erfindungsgemäße Weiterleitung von dem Nachrichtenempfänger B-Party verwaltbar bzw. administrierbar ist, vorliegend über das Internet, wie anhand der in Fig. 2 symbolisch dargestellten Rechenanlage dargestellt. Seitens der Recheneinrichtung ISAS wird die MSISDN (Kontaktierungsinformation) dann mit der MSISDN (Adressierungsinformation) an die die Weiterleitung erfolgen soll, verknüpft. Die Recheneinrichtung ISAS hinterlegt eine entsprechende Weiterleitungsinformation für Sprachanrufe seitens des Heimatregisters (HLR: Home Location Register) des Mobilfunknetzes, vorliegend gemäß einer sogenannten CFU-Routine (CFU: Call Forward Unconditional). Ferner wird von der Recheneinrichtung ISAS eine entsprechende für die Vergebührung bzw. Abrechnung (Billing) nutzbare Information erzeugt und für die Vergebührung genutzt, insbesondere für die erfindungsgemäße Weiterleitung von SMS als auch für die Weiterleitung von Sprachnachrichten gemäß CFU.

Bei einer seitens der Recheneinrichtung ISAS über das SMS-R interface von dem SMS-C/FSG empfangenen SMS, welche - wie oben bereits erläutert - von dem Nachrichtensender A-Party an den Nachrichtenempfänger B-Party gesendet wurde, wird dann die MSISDN (Kontaktierungsinformation) in der empfangenen SMS seitens der Recheneinrichtung ISAS durch die MSISDN (Adressierungsinformation) ersetzt oder ergänzt. Die so bearbeitete Nachricht wird dann von der Recheneinrichtung ISAS an die MSISDN (Adressierungsinformation) des Nachrichtenempfängers B-Party weitergeleitet. Dabei leitet die Recheneinrichtung ISAS die entsprechende SMS über das seitens des Mobilfunknetzes eingerichtete SMS-C/FSG (SMS-C: Short Message Service Center) und entsprechende Basisstationen (BSC/BTS) des Mobilfunknetzes an das entsprechende, die MSISDN (Adressierungsinformation) des Nachrichtenempfängers B-Party nutzende Endgerät (in Fig. 1 rechts unten dargestellt), vorliegend unter Einschaltung eines virtuellen Heimatregisters bzw. Besucherregisters, Virtual HLR/VLR genannt (VLR: Visitor Location Register) welches der Vermittlungseinrichtung SMSC/FSG zugeordnet ist. Eine Kopie dieser Nachricht wird vorliegend vorteilhafterweise von der Recheneinrichtung ISAS an das die MSISDN (Kontaktierungsinformation) des Nachrichtenempfängers B-Party nutzende Endgerät (in Fig. 2 mittig oben dargestellt) und/oder über das Internet als E-Mail an die E-Mailadresse und damit an die Rechenanlage des Nachrichtenempfängers B-Party übersandt. Das Versenden einer entsprechenden Kopie ist vorteilhafterweise von dem Nachrichtenempfänger B-Party über das Web Interface einrichtbar und/oder verwaltbar.

Wie in Fig. 2 weiter dargestellt, ist die Recheneinrichtung ISAS vorliegend ebenfalls mit "Text to Voice"-Einrichtungen bzw. einem entsprechenden Service verbindbar, welcher vorliegend insbesondere einen Asterisk Call Service realisiert. Der Nachrichtenempfänger B-Party kann so vorteilhafterweise an ihn gerichtete SMS auch an Festnetzrufnummem weiterleiten lassen, welche keinen Nachrichtendienst gemäß SMS unterstützen. Die weiterzuleitende SMS wird dabei von der Recheneinrichtung ISAS an einen "Text to Voice"-Server weitergeleitet. Der "Text to Voice"-Server wandelt den Inhalt der SMS, also den Inhalt bzw. Text der als SMS versendeten Nachricht des Nachrichtensenders A-Party in eine Sprachdatei um. Mit dem von der Recheneinrichtung ISAS gesteuerten Asterisk-Server wird dann die von dem Nachrichtenempfänger B-Party für die erfindungsgemäße Weiterleitung hinterlegte Festnetzrufnummer angerufen und die von dem "Text to Voice"-Server erzeugte Sprachdatei der SMS über ein unter der Festnetzrufnummer erreichbares Endgerät abgespielt. Der Übergang von dem Mobilfunknetz in das Festnetz erfolgt dabei über ein entsprechend eingerichtetes Gateway.

Die in der Figur der Zeichnung dargestellten und im Zusammenhang mit diesen beschriebenen Ausführungsbeispiele der Erfindung dienen lediglich der Erläuterung der Erfindung und sind für diese nicht beschränkend. Der Schutzumfang der vorliegenden Erfindung wird durch die beigefügten Ansprüche definiert.

## Patentansprüche

1. Verfahren zur automatischen Weiterleitung von an einen mit einer Kontaktierungsinformation in einem Mobilfunknetz als Teilnehmer registrierten Nachrichtenempfänger gerichteten und an die Kontaktierungsinformation adressierten Nachrichten gemäß einem SMS- und/oder MMS-Format in Mobilfunknetzen, wobei
a) der Nachrichtenempfänger seitens einer zur Verwaltung der Weiterleitung eingerichteten Recheneinrichtung des Mobilfunknetzes eine Adressierungsinformation für den Empfang der Nachrichten hinterlegt;
b) seitens der Recheneinrichtung des Mobilfunknetzes die Kontaktierungsinformation mit der hinterlegten Adressierungsinformation verknüpft wird;
c) seitens der Recheneinrichtung des Mobilfunknetzes unter der Kontaktierungsinformation eine Nachricht für den Nachrichtenempfänger empfangen wird;
d) die Kontaktierungsinformation der empfangenen Nachricht seitens der Recheneinrichtung des Mobilfunknetzes durch die Adressierungsinformation ersetzt oder um die Adressierungsinformation ergänzt wird;
**dadurch gekennzeichnet, dass**
e) die Hinterlegung einer Adressierungsinformation seitens der zur Verwaltung der Weiterleitung eingerichteten Recheneinrichtung des Mobilfunknetzes bei einer Hinterlegung einer Weiterleitung bzw. Umleitung von Sprachanrufen automatisch durch eine Information hinsichtlich der Adressierungsinformation für die Weiterleitung bzw. Umleitung von Nachrichten von dem Home Location Register (HLR) erfolgt;
oder
die Hinterlegung einer Adressierungsinformation für die Weiterleitung von Nachrichten durch den Nachrichtenempfänger mittels einer durch eine Web-Anwendung bereitgestellte Benutzerschnittstelle erfolgt und bei Hinterlegung der Adressierungsinformation automatisch eine Information hinsichtlich der Adressierungsinformation für die Weiterleitung bzw. Umleitung von Sprachanrufen von der für die Weiterleitung von Nachrichten eingerichteten Recheneinrichtung des Mobilfunknetzes an das Home Location Register (HLR) erfolgt;
f) der Nachrichtenempfänger über die durch die Web-Anwendung bereitgestellte Benutzerschnittstelle konfiguriert, ob eine Kopie der Nachrichten an ein die Kontaktierungsinformation nutzendes Endgerät des Nachrichtenempfängers gesendet werden soll;
g) falls der Nachrichtenempfänger ein Senden einer Kopie der Nachrichten an die Kontaktierungsinformation konfiguriert hat, eine Kopie der Nachricht an das die Kontaktierungsinformation nutzende Endgerät des Nachrichtenempfängers gesendet wird;
h) die seitens der Recheneinrichtung des Mobilfunknetzes empfangene Nachricht an wenigstens eine weitere Recheneinrichtung übertragen wird, welche die Nachricht in ein Format korrespondierend der Art der Adressierungsinformation verbringt,
wobei eine direkte Weiterleitung einrichtbar ist; und
i) die so bearbeitete Nachricht von der weiteren Recheneinrichtung an die Adressierungsinformation gesendet wird.

2. Verfahren nach Anspruch 1, **dadurch gekennzeichnet, dass** der Textinhalt der Nachricht im Rahmen der Formatverbringung seitens der wenigstens einen weiteren Recheneinrichtung in eine Sprachdatei umgewandelt wird, welche dem Nachrichtenempfänger durch Abspielen signalisiert wird.

3. Verfahren nach Anspruch 2, **dadurch gekennzeichnet, dass** der Nachrichtenempfänger eine wenigstens eine Rufnummer umfassende Nachricht über das Telekommunikationsnetz empfängt, wobei im Rahmen einer Kommunikationsverbindung unter Nutzung der Rufnummer die Sprachdatei dem Nachrichtenempfänger durch Abspielen der Sprachdatei signalisiert wird.

4. Verfahren nach einem der Ansprüche 1 bis 3, **gekennzeichnet durch** die Nutzung von Nachrichten dialogorientierter Nachrichtendienste.

5. Verfahren nach einem der Ansprüche 1 bis 4, **gekennzeichnet durch** die Nutzung von Nachrichten verzögerter Nachrichtendienste.

6. Verfahren nach einem der Ansprüche 1 bis 5, **dadurch gekennzeichnet, dass** die Weiterleitung an ein in einem Mobilfunknetz betreibbares mobiles Endgerät erfolgt.

7. Verfahren nach einem der Ansprüche 1 bis 6, **dadurch gekennzeichnet, dass** das Verfahren in einem Mobilfunknetz gemäß dem GSM- und/oder dem UMTS-Funknetzstandard ausgeführt wird.

8. Netzknoten in einem Mobilfunknetz, welcher an einer Übertragung von Nachrichten beteiligt ist, **dadurch gekennzeichnet, dass** dieser ausgebildet und/oder eingerichtet ist, die durch einen Netzknoten ausführbaren Verfahrensschritte eines Verfahrens nach einem der Ansprüche 1 bis 7 auszuführen.

## Claims

1. A method for automatically forwarding messages according to a SMS and/or MMS format in mobile radio networks, which messages are directed to a message receiver registered with a contacting information item as subscriber in a mobile radio network and addressed to the contacting information item, wherein
a) the message receiver stores an addressing information item for receiving the messages by means of a computer device of the mobile radio network, which device is adapted to administrate the forwarding;
b) the computer device of the mobile radio network links the contacting information item to the stored addressing information item;
c) the computer device of the mobile radio network receives a message intended for the message receiver under the contacting information item;
d) the computer device of the mobile radio network replaces the contacting information item of the received message with the addressing information item or complements the contacting information item with the addressing information item;
**characterized in that**
e) in case of a stored forwarding respectively redirecting of voice calls, the storage of an addressing information item by means of the computer device of the mobile radio network, which device is adapted to administrate the forwarding, will be realized automatically by an information item with respect to the addressing information item for the forwarding respectively redirecting of messages from the Home Location Register (HLR);
or
the storage of an addressing information item for the forwarding of messages by the message receiver will be realized by means of a user interface provided by a web application and if the addressing information item is stored, an information item with respect to the addressing information item for the forwarding respectively redirecting of voice calls will be automatically sent by the computer device of the mobile radio network, which device is adapted for forwarding messages, to the Home Location Register (HLR);
f) the message receiver configures, via the user interface provided by the web application, whether a copy of the messages shall be sent to a message receiver's terminal which uses the contacting information item;
g) if the message receiver configured that a copy of the messages shall be sent to the contacting information item, a copy of the message will be sent to the message receiver's terminal which uses the contacting information item;
h) the message received by the computer device of the mobile radio network will be transmitted to at least one other computer device which converts the message into a format corresponding to the type of the addressing information item,
wherein a direct forwarding can be established; and
i) the thus treated message will be sent by the other computer device to the addressing information item.

2. A method according to claim 1, **characterized in that** the text content of the message will be converted into a voice file by the at least one other computer device within the scope of the format conversion, which voice file will be signalized to the message receiver by playing it.

3. A method according to claim 2, **characterized in that** the message receiver receives a message including at least one call number via the telecommunication network, wherein the voice file will be signalized to the message receiver by playing the voice file within the scope of a communication connection using the call number.

4. A method according to one of the claims 1 to 3, **characterized by** the use of messages of conversational message services.

5. A method according to one of the claims 1 to 4, **characterized by** the use of message-delayed message services.

6. A method according to one of the claims 1 to 5, **characterized in that** the message is forwarded to a mobile terminal which can be operated in a mobile radio network.

7. A method according to one of the claims 1 to 6, **characterized in that** the method is executed in a mobile radio network according to the GSM and/or UMTS radio network standard.

8. A network node in a mobile radio network, which node is involved in a transmission of messages, **characterized in that** this one is designed and/or adapted for carrying out the process steps, which can be executed by a network node, of a method according to one of the claims 1 to 7.

## Revendications

1. Procédé de transfert automatique de messages selon un format SMS et/ou MMS dans des réseaux radio mobile, lesquels messages sont destinés à un récepteur de messages enregistré avec une information de contact comme abonné dans un réseau radio mobile et adressés à l'information de contact, dans lequel
a) le récepteur de messages stocke une information d'adressage pour recevoir les messages, par moyen d'un dispositif d'ordinateur du réseau radio mobile, lequel dispositif est adapté pour administrer le transfert;
b) le dispositif d'ordinateur du réseau radio mobile relie l'information de contact à l'information d'adressage stockée;
c) le dispositif d'ordinateur du réseau radio mobile reçoit un message destiné au récepteur de messages sous l'information de contact;
d) le dispositif d'ordinateur du réseau radio mobile remplace l'information de contact du message reçu par l'information d'adressage ou complémente l'information de contact par l'information d'adressage;
**caractérisé en ce que**
e) dans le cas où un transfert respectivement une redirection d'appels audio est stocké(e), le stockage d'une information d'adressage par moyen du dispositif d'ordinateur du réseau radio mobile se fait automatiquement par une information par rapport à l'information d'adressage pour le transfert respectivement la redirection de messages à partir du Home Location Register (HLR);
ou
le stockage d'une information d'adressage pour le transfert de messages par le récepteur de messages est réalisé par moyen d'une interface d'utilisateur fournie par une application web et si l'information d'adressage est stockée, une information par rapport à l'information d'adressage pour le transfert respectivement la redirection d'appels audio sera automatiquement envoyée par le dispositif d'ordinateur du réseau radio mobile, lequel dispositif est adapté pour administrer le transfert de messages, au Home Location Register (HLR);
f) le récepteur de messages configure, via l'interface d'utilisateur fournie par l'application web, si une copie des messages doit être envoyée à un terminal du récepteur de messages, lequel utilise l'information de contact;
g) si le récepteur de messages a configuré l'envoi d'une copie des messages à l'information de contact, une copie de message sera envoyée au terminal du récepteur de messages, lequel utilise l'information de contact;
h) le message reçu par le dispositif d'ordinateur du réseau radio mobile sera transmis à au moins un autre dispositif d'ordinateur, qui convertit le message en un format correspondant au type de l'information d'adressage,
un transfert direct pouvant être établi; et
i) le message ainsi traité sera envoyé par l'autre dispositif d'ordinateur à l'information d'adressage.

2. Procédé selon la revendication 1, **caractérisé en ce que** le contenu de texte du message est converti en un fichier de langue par l'au moins autre dispositif d'ordinateur dans le cadre de la conversion de format, lequel fichier de langue est signalisé au récepteur de messages en le faisant entendre.

3. Procédé selon la revendication 2, **caractérisé en ce que** le récepteur de messages reçoit un message comprenant au moins un numéro d'appel via le réseau de télécommunication, le fichier de langue étant signalisé au récepteur de messages en faisant entendre le fichier de langue dans le cadre d'une connexion de communication en utilisant le numéro d'appel.

4. Procédé selon l'une des revendications 1 à 3, **caractérisé par** l'utilisation des messages des services de messages orientés vers le dialogue.

5. Procédé selon l'une des revendications 1 à 3, **caractérisé par** l'utilisation des messages des services de messages à livraison retardée.

6. Procédé selon l'une des revendications 1 à 5, **caractérisé en ce que** le transfert se fait à un terminal mobile fonctionnant dans un réseau radio mobile.

7. Procédé selon l'une des revendications 1 à 6, **caractérisé en ce que** le procédé est exécuté dans un réseau radio mobile selon le standard radio mobile GSM et/ou UMTS.

8. Noeud de réseau dans un réseau radio mobile, qui participe à un transfert de messages, **caractérisé en ce que** celui-ci est configuré et/ou adapté pour exécuter les étapes de procédé d'un procédé selon l'une des revendications 1 à 7, lesquelles étapes peuvent être exécutées par un noeud de réseau.
